# DEMANDE DE BREVET EUROPEEN

(11) **EP 4 617 087 A1**
(43) Date de publication de la demande: **17.09.2025**
(21) Numéro de dépôt: 25163320.2
(22) Date de dépôt: 12.03.2025
(51) Int. Cl.: B60G 13/00, B62D 25/08

(54) **COUPELLE D'AMORTISSEUR POUR VEHICULE AUTOMOBILE, SUSPENSION COMPRENANT UNE TELLE COUPELLE ET VEHICULE COMPRENANT UNE TELLE SUSPENSION**

(30) Priorité: 13.03.2024 FR 2402494
(71) Demandeur: Flexis, 92100 Boulogne Billancourt (FR)
(72) Inventeur: MOISAN, Pascal, 78640 Villiers Saint-Frédéric (FR)
(74) Mandataire: Lavoix

(57) **Abrégé**

Coupelle (1) d'amortisseur pour un véhicule automobile, la coupelle (1) comprenant un corps cylindrique (2) creux et deux bras (3). Le corps cylindrique comprend une partie centrale qui comprend des moyens de fixation à une extrémité haute d'un amortisseur du véhicule, et une partie basse qui comprend des moyens de fixation à un longeron du véhicule. Les deux bras sont tangents au corps cylindrique et sont destinés à être fixés à une carrosserie du véhicule. Les bras (3) délimitent une ouverture (130) configurée pour permettre l'agencement d'un réseau d'alimentation à l'intérieur de la carrosserie, l'ouverture étant configurée pour être traversée par le réseau d'alimentation.

## Description

### Domaine technique

La présente invention concerne le domaine des suspensions pour véhicule automobile, notamment un véhicule comprenant un moteur alimenté électriquement par une pile à hydrogène, et en particulier des coupelles d'amortisseur pour véhicule automobile comprenant un train avant à double triangulation.

Une suspension de véhicule automobile comprend au moins un amortisseur, un ressort et une coupelle assurant la fixation entre l'amortisseur et la carrosserie du véhicule.

Généralement, l'amortisseur est fixé en son sommet sur une coupelle en tôle d'acier constituée de plusieurs pièces, la coupelle elle-même étant soudée à la structure du véhicule.

Cependant, dans le cas d'un véhicule comprenant un train avant à double triangulation, les efforts fournis par la suspension sont bien plus élevés.

En outre, un train avant à double triangulation comprend, en plus d'un triangle inférieur, un triangle supérieur qui nécessite un espace supplémentaire pour son débattement.

Par ailleurs, dans une architecture telle, l'emplacement des prises de recharge électrique et hydrogène empêche de relier efficacement la coupelle à la carrosserie du véhicule, la liaison entre la suspension et le véhicule étant par conséquent très affaiblie.

Il est par exemple connu de US20170174264A1, d'utiliser une coupelle d'amortisseur réalisée d'une seule pièce massive. La coupelle d'amortisseur est donc apte à résister aux efforts développés par un train avant à double triangulation. Cependant, la coupelle d'amortisseur est volumineuse et ne prévoit pas de passage des prises et des réseaux de recharge électrique et hydrogène.

Ainsi, malgré les avantages de cette architecture en termes de motricité et de tenue de route, une suspension à double triangle est encombrante et limite le volume disponible pour le reste des composants, compliquant et affaiblissant la liaison entre la coupelle et la structure du véhicule.

Aujourd'hui, pour pallier le manque de robustesse dans les liaisons entre la suspension et la structure du véhicule, plusieurs pièces de renfort sont communément ajoutées à la coupelle.

Cette solution reste néanmoins peu pratique du fait de la construction de la coupelle qui est faite en plusieurs pièces, entraînant des complexités lors de la fabrication et de la maintenance du véhicule. De plus, les coupelles d'amortisseur sont faites en tôle d'acier, impliquant une masse importante de la coupelle et compliquant également la fabrication et la maintenance du véhicule.

### Exposé de l'invention

La présente invention a pour but de pallier les problèmes précités et, en particulier, d'assurer une fixation robuste entre la coupelle d'amortisseur et la carrosserie du véhicule, sans compromettre le passage d'un réseau de recharge électrique et/ou en hydrogène..

L'invention a donc pour objet une coupelle d'amortisseur pour un véhicule automobile, la coupelle comprenant:
- un corps cylindrique creux le corps cylindrique comprenant une partie centrale qui comprend des moyens de fixation à une extrémité haute d'un amortisseur du véhicule, et une partie basse qui comprend des moyens de fixation à un longeron du véhicule, et
- deux bras tangents au corps cylindrique et destinés à être fixés à une carrosserie du véhicule,

dans laquelle les bras délimitent une ouverture configurée pour permettre l'agencement d'un réseau d'alimentation à l'intérieur de la carrosserie, l'ouverture étant configurée pour être traversée par le réseau d'alimentation.

Grâce à la présence des bras, la coupelle permet donc d'assurer une fixation robuste entre l'amortisseur et la carrosserie du véhicule, sans compromettre le passage du réseau d'alimentation. En effet, les bras assurent une fixation robuste à la carrosserie tout en permettant le passage d'une canalisation ou d'un câble électrique notamment au travers de l'ouverture. En d'autres termes, grâce à l'ouverture, il n'est pas nécessaire d'usiner la coupelle pour délimiter un passage pour le réseau d'alimentation, un tel usinage fragilisant la résistance de la coupelle.

Selon des aspects avantageux mais non obligatoires de l'invention, la coupelle peut incorporer une ou plusieurs des caractéristiques suivantes prises selon toutes combinaisons techniquement admissibles :
- la coupelle est composée d'une seule pièce,
- la coupelle est composée d'une seule pièce coulée en aluminium,
- les moyens de fixation de la coupelle au véhicule automobile comprennent des points de soudure,
- les moyens de fixation de la coupelle comprennent des rivets en acier plantés dans la coupelle,
- les moyens de fixation de la coupelle au véhicule automobile comprennent des trous destinés à accueillir des éléments d'attache de la carrosserie,
- la coupelle a une masse comprise entre 7 kilogrammes et 9 kilogrammes, et préférentiellement une masse de 8 kilogrammes.

L'invention concerne également une suspension de véhicule automobile comprenant une coupelle telle que définie précédemment.

Selon des aspects avantageux mais non obligatoires de l'invention, la suspension peut incorporer une ou plusieurs des caractéristiques suivantes prises selon toutes combinaisons techniquement admissibles :
- la suspension comprend un train avant à double triangulation.

L'invention concerne également un véhicule automobile comprenant :
- un moteur électrique,
- une pile à hydrogène configurée pour alimenter électriquement le moteur électrique,
- un réseau d'alimentation en hydrogène débouchant à l'extérieur d'une carrosserie du véhicule, le réseau d'alimentation étant configuré pour amener de l'hydrogène depuis l'extérieur de la carrosserie jusqu'à la pile à hydrogène,
- une suspension telle que définie précédemment, l'ouverture de la coupelle étant traversée par le réseau d'alimentation.

L'invention concerne également un véhicule automobile comprenant :
- un moteur électrique,
- une batterie configurée pour alimenter électriquement le moteur électrique,
- un réseau électrique d'alimentation débouchant à l'extérieur d'une carrosserie du véhicule, le réseau d'alimentation étant configuré pour amener un courant électrique depuis l'extérieur de la carrosserie jusqu'à la batterie, et
- une suspension telle que définie précédemment, l'ouverture de la coupelle étant traversée par le réseau électrique d'alimentation.

L'invention concerne également un véhicule automobile comprenant :
- un moteur thermique,
- un réservoir configuré pour alimenter le moteur thermique,
- un réseau d'alimentation en hydrocarbure débouchant à l'extérieur d'une carrosserie du véhicule, le réseau d'alimentation étant configuré pour amener un hydrocarbure depuis l'extérieur de la carrosserie jusqu'au réservoir, et
- une suspension telle que définie précédemment, l'ouverture de la coupelle étant traversée par le réseau d'alimentation en hydrocarbure.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :
[Fig. 1] La figure 1 est une vue schématique d'un véhicule selon l'invention ;
[Fig. 2] La figure 2 est une vue en perspective de dessus d'une coupelle d'amortisseur du véhicule de la figure 1;
[Fig. 3] La figure 3 est une vue de dessous de la coupelle d'amortisseur de la figure 2 ;
[Fig. 4] La figure 4 est une vue de côté de la coupelle d'amortisseur des figures 2 et 3 et d'un réseau d'alimentation du véhicule de la figure 1, la coupelle étant assemblée à une carrosserie du véhicule de la figure 1 ;
[Fig. 5] La figure 5 est une vue schématique de la coupelle des figures 2 et 3 intégrée à une suspension du véhicule de la figure 1;
[Fig. 6] La figure 6 est une vue de dessous de la coupelle intégrée à la suspension de la figure 5 ; et
[Fig. 7] La figure 7 est une vue latérale de la coupelle intégrée à la suspension de la figure 5.

### Description détaillée

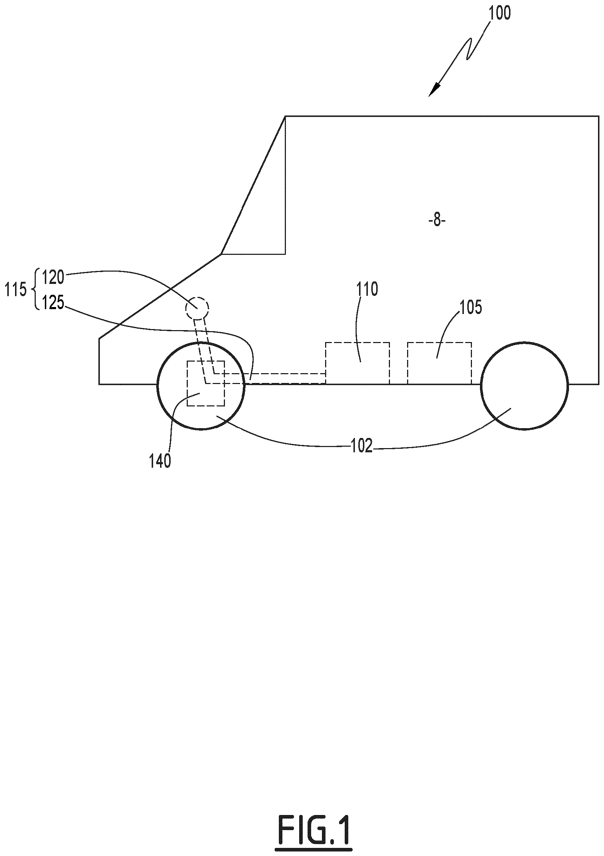

Un véhicule automobile 100 conforme à l'invention est représenté sur la figure 1. Le véhicule 100 comprend une carrosserie 8 et des roues 102 configurées pour être entrainées en rotation de sorte à déplacer le véhicule 100.

Le véhicule 100 comprend un moteur électrique 105. Le moteur électrique 105 est configuré pour entrainer en rotation les roues 102.

Le véhicule 100 comprend également une pile à hydrogène 110, autrement dit une pile à combustible, configurée pour alimenter électriquement le moteur électrique 105. Le moteur électrique 105 et la pile à hydrogène 104 sont enfermés dans la carrosserie 8 du véhicule 100.

Le véhicule 100 comprend un réseau d'alimentation 115 configuré pour alimenter la pile à hydrogène 110 avec de l'hydrogène. En d'autres termes, le réseau d'alimentation 115 est configuré pour amener de l'hydrogène depuis l'extérieur de la carrosserie 8 jusqu'à la pile à hydrogène 110. Plus précisément, le réseau d'alimentation 115 comprend un orifice de remplissage 120 traversant la carrosserie 8 et une canalisation 125 enfermée dans la carrosserie 8 et reliant la pile à hydrogène 110 à l'orifice de remplissage 120.

Le véhicule 100 comprend une suspension avant 140 configurée pour limiter les chocs et les vibrations lors du roulage, en maintenant les roues 102 au sol.

La suspension avant 140 comporte un amortisseur 6, un ressort, et une coupelle 1 d'amortisseur.

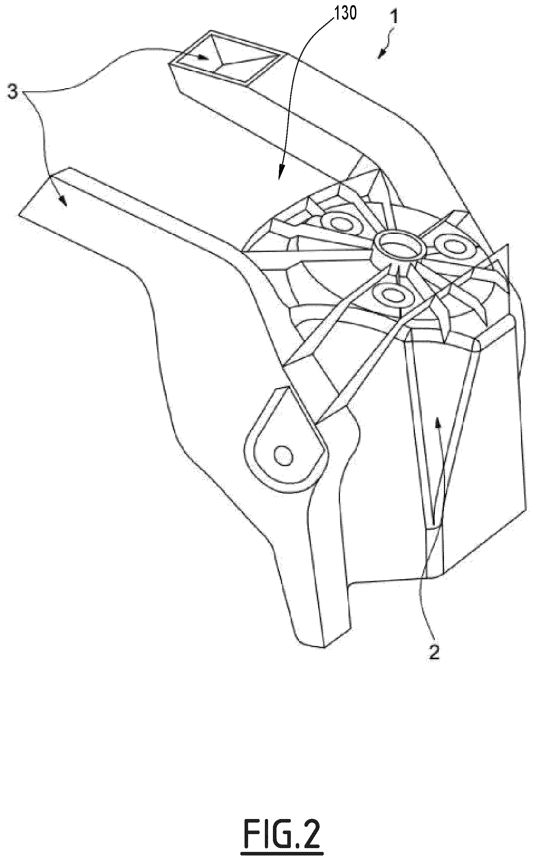

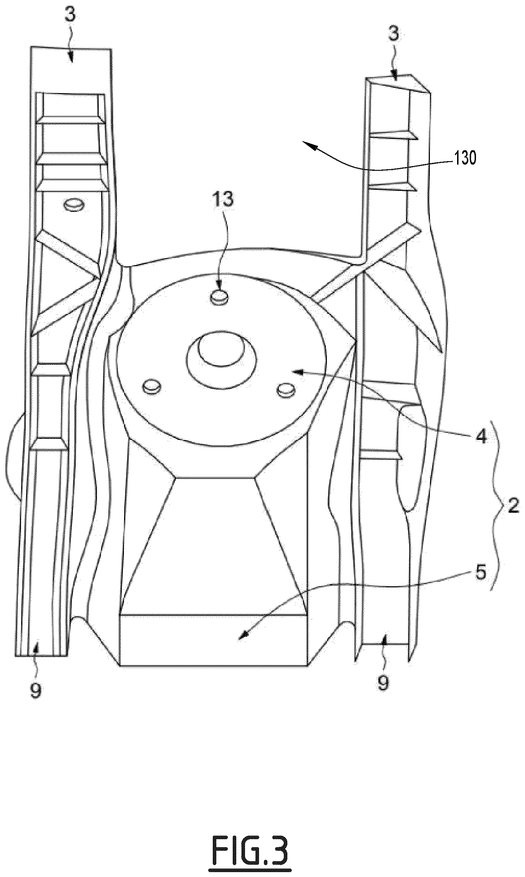

La coupelle 1 est représentée, plus en détails sur les figures 2 et 3. La coupelle 1 comprend un corps cylindrique 2 et deux bras 3 tangents au corps cylindrique 2.

Le corps cylindrique 2 est configuré pour recevoir l'amortisseur 6 et transmettre les efforts entre l'amortisseur 6 et la carrosserie 8. Le corps cylindrique 2 comporte une partie centrale 4 et une partie basse 5, la partie centrale 4 comprenant des moyens de fixation à une extrémité haute de l'amortisseur 6, et la partie basse 5 comprenant des moyens de fixation à un longeron 7 du véhicule.

Les bras 3 sont tangents au corps cylindrique 2. Plus précisément, chacun des bras 3 s'étend le long de la partie basse 5 du corps cylindrique 2 et s'étend au-delà de la partie centrale 4. En d'autres termes, les bras 3 forment des protubérances du corps cylindrique 2. Les bras 3 délimitent, entre eux et avec la partie centrale 4, une ouverture 130 configurée pour permettre l'agencement du réseau d'alimentation 115 à l'intérieur de la carrosserie 8. Plus précisément, l'ouverture 130 est configurée pour être traversée par la canalisation 125 du réseau d'alimentation 115.

Les bras 3 sont destinés à être fixés à la carrosserie 8 et comprennent des moyens de fixation à la carrosserie 8 du véhicule 100.

La coupelle 1 comprend des trous 9 aptes à recevoir des éléments de fixation de ladite coupelle 1 au véhicule.

La coupelle 1 comprend des trous 13 aptes à recevoir des éléments de fixation de l'amortisseur 6 à ladite coupelle 1.

La coupelle comprend de l'aluminium, et préférentiellement elle est composée d'une seule pièce, en particulier d'une seule pièce coulée en aluminium. Cette caractéristique permet de réduire considérablement la masse de la coupelle 1, jusqu'à diminuer de moitié la masse d'une coupelle en tôle d'acier. La coupelle 1 en aluminium a une masse comprise entre 7 kilogrammes et 9 kilogrammes, et préférentiellement une masse de 8 kilogrammes.

Les moyens de fixation de la coupelle 1 à la suspension avant 140 et à la carrosserie 8 du véhicule comprennent des points de soudure 12 et/ou des trous 9 destinés à accueillir des éléments d'attache de la carrosserie 8.

Avantageusement, en alternative ou en complément aux points de soudure, les moyens de fixation de la coupelle 1 au véhicule automobile 100 comprennent des rivets en acier plantés dans la coupelle 1 et les éléments d'attache de la carrosserie comprennent des douilles et/ou des boulons.

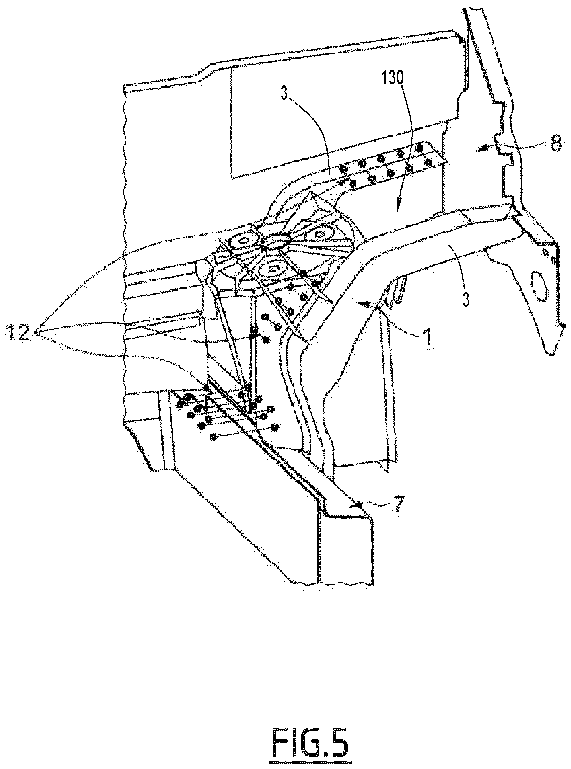

Les figures 5, 6 et 7 illustrent un mode de réalisation dans lequel les bras 3 de la coupelle 1 sont soudés à la carrosserie 8 du véhicule, la partie centrale 4 du corps cylindrique 2 est soudée à l'extrémité haute de l'amortisseur 6, et la partie basse 5 du corps cylindrique 2 est soudée à la partie haute du longeron 7 du véhicule.

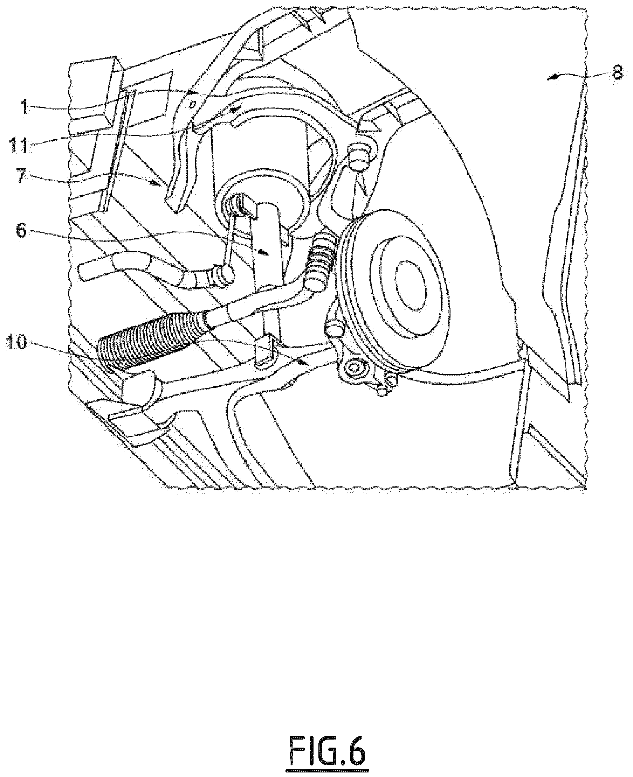

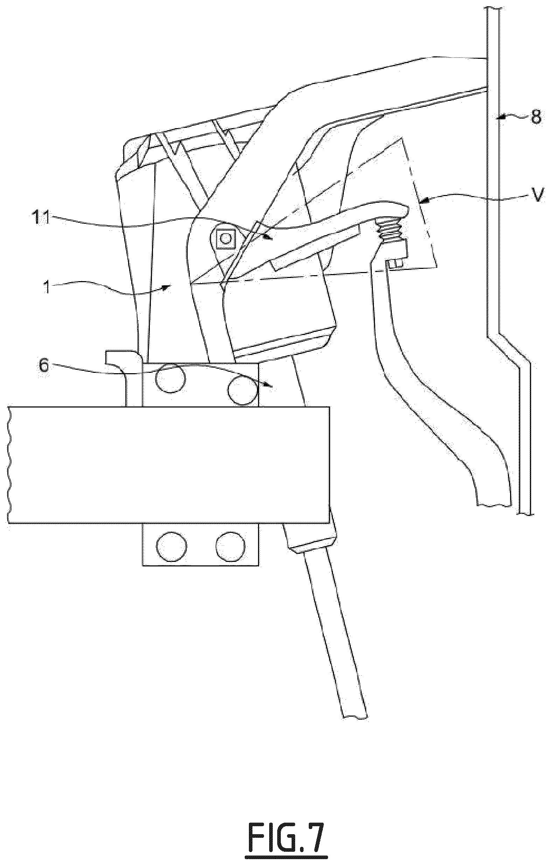

Avantageusement, la suspension avant 140 comprend un train avant à double triangulation. Le train avant à double triangulation comprend un triangle inférieur 10, non représenté sur les figure 6 et 7 pour la clarté des figures, et un triangle supérieur 11, le triangle supérieur 11 comprenant un débattement qui nécessite un volume V libre schématisé sur la figure 7. L'utilisation d'un véhicule comprenant un train avant à double triangulation apporte une meilleure motricité et une meilleure tenue de route.

Les efforts auxquels est soumis la suspension avant 140, notamment la coupelle 1, sont bien plus élevés lorsque le train avant comprend une architecture en double triangulation que dans le cas d'une simple triangulation.

La coupelle 1 permet donc d'assurer une fixation robuste entre l'amortisseur 6 et la carrosserie 8 du véhicule, sans compromettre le passage du réseau d'alimentation 115, notamment la circulation de la canalisation 125 entre l'orifice de remplissage 120 et la pile à hydrogène 110.

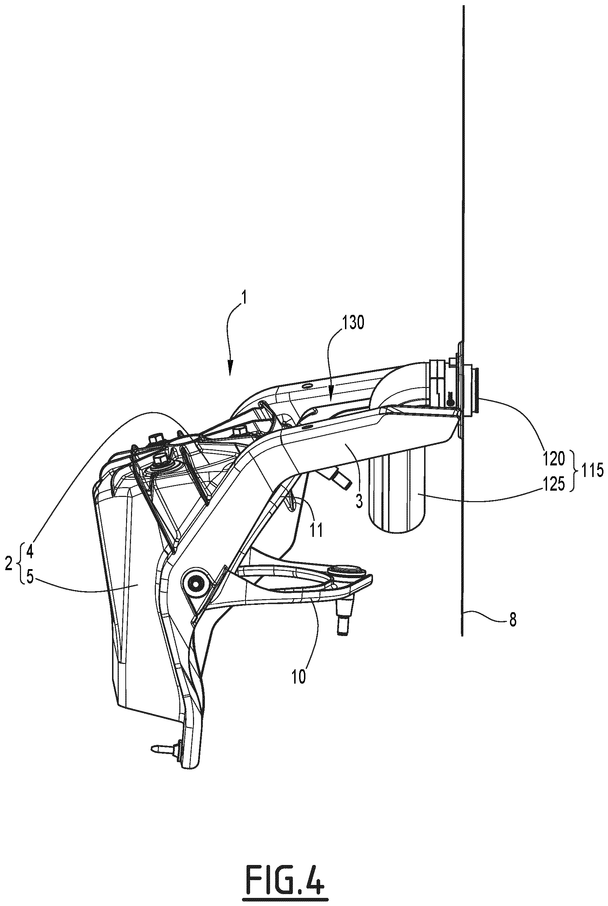

En effet, les bras 3 sont conçus pour résister aux efforts générés par une suspension avant 140 en double triangulation. Ainsi, la présence des bras 3 assurent une fixation robuste à la carrosserie 8 tout en assurant le passage de la canalisation 125. Plus précisément, l'architecture de la coupelle 3, notamment la présence de l'ouverture 130 entre les bras 3, permet d'optimiser l'agencement à l'intérieur de la carrosserie 8. En effet, les bras 3 sont fixés à la carrosserie 8 sans entraver le passage de la canalisation 125 puisque, comme représenté sur la figure 4, le réseau d'alimentation 115 traverse l'ouverture 130. En d'autres termes, grâce à l'ouverture 130, il n'est pas nécessaire d'usiner la coupelle 1 pour délimiter un passage pour la canalisation 125, un tel usinage fragilisant la résistance de la coupelle 1, notamment aux efforts générés par une suspension avant 115 en double triangulation.

Dans une variante non représentée, l'architecture de la coupelle permet également le passage de réseaux électriques dans l'ouverture, notamment dans le cas où le véhicule est pourvu d'une prise électrique de recharge d'une batterie ou du moteur électrique.

Dans une variante non représentée, l'architecture de la coupelle permet, en variante ou en complément à l'amenée d'hydrogène, le passage d'un réseau d'alimentation d'un réservoir en hydrocarbure d'origine pétrolière dans l'ouverture, notamment dans le cas où le véhicule est pourvu d'un moteur thermique alimenté par un hydrocarbure d'origine pétrolière.

La coupelle 1 telle que présentée permet d'élaborer une liaison robuste entre la suspension et la carrosserie 8 du véhicule, qui résiste aux efforts élevés effectués par la suspension, tout en facilitant la fabrication et la maintenance du véhicule automobile.

L'invention s'applique pour tous les cas de liaison coupelle entre un amortisseur 6 et la carrosserie 8 d'un véhicule automobile, et pour tous les types de véhicule comprenant un système de suspension.

## Revendications

1. Coupelle (1) d'amortisseur pour un véhicule automobile, la coupelle (1) comprenant:
- un corps cylindrique (2) creux le corps cylindrique (2) comprenant une partie centrale (4) qui comprend des moyens de fixation à une extrémité haute d'un amortisseur (6) du véhicule, et une partie basse (5) qui comprend des moyens de fixation à un longeron (7) du véhicule, et
- deux bras (3) tangents au corps cylindrique (2) et destinés à être fixés à une carrosserie (8) du véhicule,
la coupelle étant **caractérisée en ce que** les bras (3) délimitent une ouverture (130) configurée pour permettre l'agencement d'un réseau d'alimentation (115) à l'intérieur de la carrosserie (8), l'ouverture (130) étant configurée pour être traversée par le réseau d'alimentation (115).

2. Coupelle (1) selon la revendication 1, composée d'une seule pièce.

3. Coupelle (1) selon l'une quelconque des revendications 1 ou 2, composée d'une seule pièce coulée en aluminium.

4. Coupelle (1) selon l'une quelconque des revendications 1 à 3, dans laquelle les moyens de fixation de la coupelle (1) au véhicule automobile comprennent des points de soudure (12).

5. Coupelle (1) l'une quelconque des revendications 1 à 4, dans laquelle les moyens de fixation de la coupelle (1) comprennent des rivets en acier plantés dans la coupelle (1).

6. Coupelle (1) selon l'une quelconque des revendications 1 à 5, dans laquelle les moyens de fixation de la coupelle (1) au véhicule automobile comprennent des trous (9) destinés à accueillir des éléments d'attache de la carrosserie (8).

7. Coupelle (1) selon l'une quelconque des revendications 1 à 6, dans laquelle la coupelle (1) a une masse comprise entre 7 kilogrammes et 9 kilogrammes, et préférentiellement une masse de 8 kilogrammes.

8. Suspension (140) de véhicule automobile comprenant une coupelle (1) selon l'une quelconque des revendications 1 à 7.

9. Suspension (140) selon la revendication précédente comprenant un train avant à double triangulation.

10. Véhicule automobile (100), comprenant :
- un moteur électrique (105),
- une pile à hydrogène (110) configurée pour alimenter électriquement le moteur électrique (105),
- un réseau d'alimentation (115) en hydrogène débouchant à l'extérieur d'une carrosserie (8) du véhicule (100), le réseau d'alimentation (115) étant configuré pour amener de l'hydrogène depuis l'extérieur de la carrosserie (8) jusqu'à la pile à hydrogène (110), et
- une suspension (140) selon l'une quelconque des revendications 8 ou 9, l'ouverture (130) de la coupelle (1) étant traversée par le réseau d'alimentation (115).

11. Véhicule automobile (100), comprenant :
- un moteur électrique,
- une batterie configurée pour alimenter électriquement le moteur électrique,
- un réseau électrique d'alimentation débouchant à l'extérieur d'une carrosserie (8) du véhicule (100), le réseau d'alimentation (115) étant configuré pour amener un courant électrique depuis l'extérieur de la carrosserie (8) jusqu'à la batterie, et
- une suspension (140) selon l'une quelconque des revendications 8 ou 9, l'ouverture (130) de la coupelle (1) étant traversée par le réseau électrique d'alimentation.

12. Véhicule automobile (100), comprenant :
- un moteur thermique,
- un réservoir configuré pour alimenter le moteur thermique,
- un réseau d'alimentation en hydrocarbure débouchant à l'extérieur d'une carrosserie (8) du véhicule (100), le réseau d'alimentation (115) étant configuré pour amener un hydrocarbure depuis l'extérieur de la carrosserie (8) jusqu'au réservoir, et
- une suspension (140) selon l'une quelconque des revendications 8 ou 9, l'ouverture (130) de la coupelle (1) étant traversée par le réseau d'alimentation en hydrocarbure.
